# FASCICULE DE BREVET EUROPEEN

(11) **EP 4 176 179 B1**
(45) Date de publication et mention de la délivrance du brevet: **25.09.2024**
(21) Numéro de dépôt: 21746514.5
(22) Date de dépôt: 05.07.2021
(51) Int. Cl.: F16F 9/06

(54) **DISPOSITIF DE COMPENSATION DE VOLUME DU LIQUIDE D'AMORTISSEMENT POUR AMORTISSEUR**
VORRICHTUNG ZUM VOLUMENAUSGLEICH DER DÄMPFUNGSFLÜSSIGKEIT FÜR EINEN DÄMPFER
DEVICE FOR VOLUME COMPENSATION OF THE DAMPING LIQUID FOR A DAMPER

(30) Priorité: 03.07.2020 FR 2007055
(43) Date de publication de la demande: 10.05.2023
(73) Titulaire: Motion, 69400 Villefranche-sur-Saone (FR)
(72) Inventeur: ALFANO, Matthieu, 01480 FAREINS (FR)
(74) Mandataire: IP Trust
(86) Numéro de dépôt international: PCT/FR2021/051234
(87) Numéro de publication internationale: WO 2022/003306

(56) Documents cités:
- EP-A1- 0 233 792
- WO-A1-2016/148582
- FR-A- 1 183 828
- GB-A- 2 072 302

## Description

### Domaine technique de l'invention

L'invention concerne le domaine des amortisseurs présents dans les suspensions de véhicules, et notamment les voitures, les motos, les cycles et équivalents.

L'invention concerne plus particulièrement un dispositif permettant de compenser la variation du volume d'huile (ou autre fluide utilisé) à l'intérieur d'un amortisseur, qu'elle soit due à la dilatation thermique ou au déplacement de la Tige du Piston.

### Etat de la technique

De façon simplifiée, un amortisseur comporte au moins un Corps Principal cylindrique creux contenant un fluide d'amortissement (on prendra l'exemple de l'huile), dont l'une au moins de ses extrémités est pourvue d'un passage axial pour le passage, l'étanchéité et le guidage d'une Tige (dont le rôle est de transmettre les efforts extérieurs), ladite Tige étant solidaire d'un Piston Principal (dont le rôle est de transmettre à la Tige les efforts résultants des pertes de charges internes) translatant à l'intérieur du dit Corps et le divisant en deux chambres de travaille distinctes, l'une constituant une Chambre de Compression et l'autre constituant une Chambre de Détente. Un Dispositif de Dissipation d'Energie (laminage de l'huile) étant présent directement au sein du Piston Principal ou déporté à l'extérieur du Corps Principal et présentant alors un Circuit Hydraulique supplémentaire permettant la circulation de l'huile entre les Chambres de Compression et de Détente. En fonctionnement, le volume interne disponible pour l'huile varie de façon importante pour deux raisons principales, d'une part la dilatation thermique de l'huile qui est différente de celle du ou des matériaux constituant le Corps et autres pièces de l'amortisseur, et d'autre part la translation du volume de la Tige qui est en partie à l'intérieur du Corps Principal pendant les phases de compression puis à l'extérieur de ce dernier pendant les phases de détente.

Afin de compenser les variations du volume d'huile à l'intérieur de l'amortisseur, les technologies actuelles présentent une Chambre dite de Compensation. Une Chambre de Compensation est un volume compressible (par exemple un cylindre comportant un gaz) en connexion avec l'huile du circuit principal de l'amortisseur (c'est à dire l'huile qui subit les variations de pression), présentant un dispositif de séparation entre l'huile et l'élément compressible ou non (par exemple un Piston Flottant ou une membrane). Cette Chambre de Compensation peut présenter une pression statique initiale nulle ou non, ou être dite « ouverte » et présenter alors une pression dite atmosphérique constante.

Une première solution consiste à connecter la Chambre de Compensation avec la Chambre de Compression (respectivement la Chambre de Détente). Dans ce cas, la Chambre de Compensation doit présenter une pression statique (pression initiale non due au mouvement du Piston) supérieure à la pression maximale dynamique (pression due à la mise en mouvement du Piston) dans la Chambre de Compression (respectivement de détente). A défaut, le déplacement du Piston engendrera la compression de la Chambre de Compensation et non le déplacement de l'huile à travers le Dispositif de Dissipation d'Energie, c'est-à-dire un comportement de type « ressort » opposé à celui recherché de type « amortisseur ». Cette pression statique élevée, nécessaire au fonctionnement d'une telle solution, engendre un effort de retour de la Tige de l'amortisseur pouvant classiquement atteindre 300N (exemple d'un amortisseur arrière de VTT), un seuil élevé de mise en mouvement des joints (dit « collage »), ainsi que des risques de fuites accrus. Ces phénomènes viennent directement détériorer les performances de confort (dit sensibilité de l'amortisseur), d'adhérence et de fiabilité.

Une seconde solution consiste à connecter la Chambre de Compensation après le Dispositif de Dissipation d'Energie. La perte de charge créée par ce dispositif permet alors de baisser la pression maximale dynamique vue par la Chambre de Compensation et de diminuer d'autant la pression statique nécessaire de celle-ci. Cette seconde solution ne supprime pas totalement la pression statique mais la diminue d'un facteur 3 environ. Elle implique cependant l'utilisation d'un Dispositif de Dissipation d'Energie déporté.

De plus, au-delà de la problématique d'une pression statique élevée, les solutions existantes ne permettent pas de garantir instantanément la compensation de la variation du volume dans la chambre dite négative. Lors d'une compression (respectivement d'une détente), la Chambre de Compression (respectivement de détente) voit sa pression augmenter ; elle est alors dite « positive » et la Chambre de Détente (respectivement de compression) est dite « négative ». Si la Chambre de Compensation n'est pas en connexion directe (c'est-à-dire avec une perte de charge faible ou négligeable) avec la chambre négative, la compensation de volume peut ne pas se faire suffisamment rapidement, ce qui provoque une dépression dans la chambre négative (c'est à dire une pression inférieure à la pression statique de l'amortisseur). Cette dépression peut créer de l'ébullition et/ou du vide et engendrer un phénomène de cavitation endommageant les composants fonctionnels et détériorant les performances.

Enfin, ces solutions ne permettent pas une gestion satisfaisante des vibrations retransmises par la Tige. Si le rôle d'un amortisseur est effectivement d'amortir les déplacements de la Tige (par dissipation d'énergie), il devrait idéalement aussi permettre la filtration des vibrations de cette dernière, c'est-à-dire ne pas les retransmettre au Corps Principal (via le Dispositif de Dissipation d'Energie). Pour cela, les variations de volumes créées par les vibrations devraient être idéalement instantanément et directement compensées par la Chambre de Compensation. Ce qui est impossible dans la configuration des deux solutions présentées précédemment, soit du fait de la pression statique trop élevée de la Chambre de Compensation (supérieure à la surpression créée par les vibrations), soit du fait de la position de la Chambre de Compensation située « derrière » le Dispositif de Dissipation d'Energie. La non-filtration des vibrations implique une limite des performances de confort et d'adhérence, et engendre un échauffement de l'huile qui dégrade l'endurance de fonctionnement de l'amortisseur.

Le document WO 2016/148582 A1 est considéré comme étant l'état de la technique le plus proche de l'objet de l'invention et divulgue les caractéristiques du préambule de la revendication indépendante 1.

### Exposé de l'invention

Le dispositif selon l'invention permet de connecter (respectivement déconnecter) directement (c'est-à-dire avec une perte de charge faible ou négligeable), la Chambre de Compensation à la chambre négative (respectivement positive), et ce à chaque changement de sens de déplacement du Piston, c'est à dire à chaque passage d'une phase de compression à détente et inversement (ce passage d'une phase à l'autre est appelé phase de transition). Ainsi, la Chambre de Compensation ne voit jamais de surpression dynamique (présente uniquement dans la chambre positive) et sa pression statique peut être choisit aussi basse que désirée, garantissant un fonctionnement optimal (confort, adhérence et fiabilité) sans seuil de déclenchement, sans collage de joint et sans risque de fuite.

De plus, la connexion directe (perte de charge faible ou négligeable) permet de garantir la pression minimale de la chambre négative qui est alors égale à la pression statique de la Chambre de Compensation, ce qui supprime le risque de cavitation.

Enfin, le dispositif selon l'invention permet la connexion directe (c'est à dire avec une perte de charge faible ou négligeable) entre la Chambre de Compression, la Chambre de Détente et la Chambre de Compensation pendant les changements de phases (c'est à dire lors de changement de direction du Piston). Ainsi, pendant cette courte phase de transition, l'huile s'échange uniquement entre ces trois chambres, et ce avec des pertes de charges faibles ou négligeables. Dans cette plage d'utilisation, que l'on soit en compression ou en détente, et quelle que soit la vitesse de passage de l'une à l'autre des phases, ces mouvements du Piston appelés oscillations de faibles amplitudes ou vibrations, sont donc filtrés. Il n'y a alors ni dissipation d'énergie ni transmission d'effort au Corps Principal. Les performances de confort, d'adhérence et d'endurance (non-échauffement de l'huile) sont alors considérablement augmentées.

Pour cela, le dispositif selon l'invention comporte au moins un Corps Principal cylindrique creux contenant un fluide d'amortissement (on prendra l'exemple de l'huile), dont l'une au moins de ses extrémités est pourvue d'un passage axial pour le passage, l'étanchéité et le guidage d'une Tige, ladite Tige étant solidaire d'un Piston Principal translatant à l'intérieur du dit corps et le divisant en deux chambres de travail distinctes, l'une constituant une Chambre de Compression et l'autre constituant une Chambre de Détente. Un Dispositif de Dissipation d'Energie (laminage de l'huile) étant présent directement au sein du Piston Principal ou déporté à l'extérieur du Corps Principal et présentant donc un Circuit Hydraulique permettant la circulation de l'huile entre les Chambres de Compression et de Détente.

Selon une première caractéristique le dispositif présente une Chambre de Compensation connectée directement (c'est-à-dire avec une perte de charge faible ou négligeable) à la Chambre de Compression ET à la Chambre de Détente via un ou plusieurs Canaux Internes à la Tige et/ou au Piston, et donc un ou plusieurs Orifices au niveau de la Tige et/ou du Piston débouchant dans la Chambre de Compression ET dans la Chambre de Détente. On appelle ces Orifices, Orifices de compensation. Selon un mode de réalisation avantageux, la Chambre de Compensation sera donc solidaire de la Tige, située à l'opposé du Piston et à l'extérieur du Corps principal. Cependant, la Chambre de Compensation peut être positionnée n'importe où et utiliser tout type de mise en connexion selon les pratiques usuelles permettant de réaliser la caractéristique spécifique décrite ci-dessus.

Selon une seconde caractéristique, le dispositif présente une ou plusieurs pièces rigides appelées Sliders (dans la suite de la description et par souci de simplification on parlera de Slider qu'il soit simple ou multiple) pouvant translater librement au travers, autour ou à l'intérieur du Piston et/ou de la Tige dans la direction axiale de la Tige (et du Corps Principal) et entre deux positions extrêmes, l'une vers la Chambre de Compression dite « position de détente » et l'autre vers la Chambre de Détente dite « position de compression ». Dans sa position de détente (respectivement de compression), ledit Slider vient obturer (ou actionner un dispositif qui obture) les Orifices de Compensation de la Chambre de Détente (respectivement de compression), et libérer (ou actionner un dispositif qui libère) les Orifices de Compensation de la Chambre de Compression (respectivement de détente). Les Orifices de compensations et le Slider étant positionnés de telle sorte qu'il est impossible de fermer en même temps à la fois les Orifices de compensation de la Chambre de Compression et ceux de la Chambre de Détente, et que la sommes des sections libres (c'est à dire non obturées par le Slider) de ces Orifices permette toujours un passage d'huile direct (c'est à dire avec une perte de charge faible ou négligeable). Le Slider étant une pièce rigide, la fermeture complète des Orifices de Compensation de la Chambre de Compression (respectivement de détente) entraine nécessairement et instantanément l'ouverture des Orifices de Compensation de la Chambre de Détente (respectivement de compression). Selon un mode de réalisation avantageux, le Slider et le Piston et/ou la Tige peuvent présenter une forme complémentaire qui permet la fermeture des Orifices de façon progressive, et que lesdites Orifices soient totalement obstrués avant tout contact solide entre les différentes pièces.

Ainsi, le Slider étant libre en translation, lorsque l'amortisseur entame une phase de compression (respectivement de détente), l'augmentation de pression (pression dynamique) dans la Chambre de Compression (respectivement de détente) crée une force qui va déplacer le Slider vers sa position de compression (respectivement de détente), et donc fermer les Orifices de Compensation de la Chambre de Compression (respectivement de détente) et ouvrir les Orifices de Compensation de la Chambre de Détente (respectivement de compression). La Chambre de Compensation sera alors en connexion directe avec la Chambre de Détente (respectivement de compression), c'est-à-dire la chambre dite négative, mais n'aura aucune connexion avec la Chambre de Compression (respectivement de détente), c'est-à-dire la chambre dite positive.

Selon une troisième caractéristique, si une autre solution est mise en oeuvre pour la gestion des variations du volume d'huile ou que cette gestion n'est pas nécessaire, et qu'il n'existe donc pas de Chambre de Compensation en connexion directe avec la Tige et/ou le Piston Principal, ce dernier présente un ou plusieurs canaux permettant la connexion directe entre la Chambre de Compression et la Chambre de Détente, ce qui permet d'assurer la fonction de filtration des vibrations décrite précédemment.

Selon un mode particulier de réalisation, le Slider est au contact du Corps Principal dans la direction radiale. Ainsi, les frictions existantes entre le Slider et le Corps, aussi faibles soient-elles, s'opposent à la mise en mouvement du Slider. Lorsque le Piston se déplace vers la Chambre de Compression (respectivement de détente), le Slider qui résiste au déplacement se retrouve donc, relativement au Piston, en déplacement vers la Chambre de Détente (respectivement de compression), et ce avant même l'augmentation significative de la pression dans la Chambre de Compression (respectivement de détente). Ce phénomène accélère donc la mise en position du Slider et réduit d'autant la durée de la phase de transition.

Selon un mode particulier de réalisation, le Slider est externe au Piston, c'est-à-dire qu'il ne le traverse pas. Ainsi, le Piston ne peut pas être en contact direct radialement avec le corps ; le Slider étant nécessairement présent entre les deux pièces. Ce mode de réalisation a pour conséquence de simplifier le Piston Principal et de garantir le mode de réalisation particulier précédent.

Selon un mode particulier de réalisation, les Orifices de Compensations sont uniquement présents sur le Piston. Ce mode de réalisation a pour conséquence de simplifier la Tige et la forme du Slider.

Selon un mode particulier de réalisation, le Slider et le Piston ne font qu'un. Le « Piston-slider » est donc directement en translation sur la Tige qui présente les Orifices de compensation. Ce mode de réalisation a pour conséquence de diminuer le nombre de pièces.

Selon un mode particulier de réalisation, le Slider traverse le Piston en une section non discontinue (par exemple cylindrique). Ce mode de réalisation a pour conséquence d'isoler le Slider des efforts transitant entre la Tige, le Piston et le corps (en radial) et de garantir alors une translation de qualité et une donc réactivité optimisée du dispositif.

Selon un mode particulier de réalisation, le Slider vient fermer un volume d'huile qui diminue avec le rapprochement du Slider vers sa position extrême. La forme du Slider est telle que ce volume devient clos avant l'interaction « solide » du Slider avec le Piston et/ou la Tige correspondant à sa position extrême. L'enfermement de ce volume crée une butée hydraulique. Ce volume d'huile est relié à un Circuit Hydraulique en connexion avec la chambre négative et présentant un dispositif de type anti-retour (un clapet, une bille/ressort, un joint spécifique, etc.) qui permet de réalimenter ledit volume d'huile lors du changement de phase et permettre de déplacer à nouveau le Slider. Ce comportement de type butée hydraulique progressive permet de supprimer tout risque de claquement, bruit ou vibration lié à l'atteinte des positions extrêmes du Slider ; le fonctionnement du dispositif est alors plus souple et silencieux.

L'invention concerne ainsi, selon une première configuration, un dispositif de compensation de volume du liquide d'amortissement pour amortisseur, utilisé en particulier pour les ensembles de suspensions pour cycles et autres véhicules, lequel dispositif comprenant au moins un Corps Principal cylindrique creux contenant un fluide, dont l'une au moins de ses extrémités est pourvue d'un passage axial pour le passage, l'étanchéité et le guidage d'une Tige, ladite Tige étant solidaire d'un Piston Principal translatant à l'intérieur du dit corps et le divisant en deux chambres de travail distinctes, l'une constituant une Chambre de Compression et l'autre constituant une Chambre de Détente, caractérisé en ce que le dispositif présente :
- d'une part une Chambre de Compensation connectée directement (c'est-à-dire avec une perte de charge faible ou négligeable) à la Chambre de Compression et à la Chambre de Détente via un ou plusieurs Canaux Internes à la Tige et/ou au Piston, et donc un ou plusieurs Orifices (dits de Compensation) au niveau de la Tige et/ou du Piston débouchant dans la Chambre de Compression et dans la Chambre de Détente,
- et d'autre part une ou plusieurs pièces rigides appelées Slider pouvant translater librement au travers, autour ou à l'intérieur du Piston et/ou de la Tige dans la direction axiale de la Tige (2) et du Corps Principal et entre deux positions extrêmes, l'une vers la Chambre de Compression dite « position de détente » (respectivement l'autre vers la Chambre de Détente dite « position de compression ») dans laquelle ledit Slider vient obturer (ou actionner un dispositif qui obture) les Orifices de Compensation de la Chambre de Détente (5) (respectivement de Compression), et libérer (ou actionner un dispositif qui libère) les Orifices de Compensation de la Chambre de Compression (respectivement de Détente), les Orifices de compensations et le Slider étant positionnés de telle sorte qu'il est impossible de fermer en même temps à la fois les Orifices de compensation de la Chambre de Compression et ceux de la Chambre de Détente, et que la somme des sections libres (c'est à dire non obturées par le Slider) des Orifices permette toujours un passage d'huile direct (c'est à dire avec une perte de charge faible ou négligeable).

L'invention concerne également, selon une autre configuration, un dispositif de compensation de volume du liquide d'amortissement pour amortisseur, utilisé en particulier pour les ensembles de suspensions pour cycles et autres véhicules, comprenant au moins un Corps Principal cylindrique creux contenant un fluide, dont l'une au moins de ses extrémités est pourvue d'un passage axial pour le passage, l'étanchéité et le guidage d'une Tige, ladite Tige étant solidaire d'un Piston Principal translatant à l'intérieur du dit corps et le divisant en deux chambres de travail distinctes, l'une constituant une Chambre de Compression et l'autre constituant une Chambre de Détente, caractérisé en ce que le dispositif présente :
- d'une part la Chambre de Compression et la Chambre de Détente sont connectées directement (c'est-à-dire avec une perte de charge faible ou négligeable) l'une à l'autre via un ou plusieurs Canaux Internes à la Tige et/ou au Piston, et donc un ou plusieurs Orifices au niveau de la Tige et/ou du Piston débouchant dans la Chambre de Compression ET dans la Chambre de Détente,
- et d'autre part une ou plusieurs pièces rigides appelées Slider pouvant translater librement au travers, autour ou à l'intérieur du Piston et/ou de la Tige dans la direction axiale de la Tige et du Corps Principal et entre deux positions extrêmes, l'une vers la Chambre de Compression dite « position de détente » (respectivement l'autre vers la Chambre de Détente dite « position de compression ») dans laquelle ledit Slider vient obturer (ou actionner un dispositif qui obture) les Orifices de la Chambre de Détente (respectivement de Compression), et libérer (ou actionner un dispositif qui libère) les Orifices de la Chambre de Compression (respectivement de Détente), les Orifices et le Slider étant positionnés de telle sorte qu'il est impossible de fermer en même temps à la fois les Orifices de compensation de la Chambre de Compression et ceux de la Chambre de Détente, et que la somme des sections libres (c'est à dire non obturées par le Slider) des Orifices permette toujours un passage d'huile direct (c'est à dire avec une perte de charge faible ou négligeable).

Selon d'autres caractéristiques avantageuses et non limitatives de ces deux configurations, prises seules ou selon toute combinaison techniquement réalisable :
- le Slider est au contact du Corps Principal dans la direction radiale.
- d'une part le Slider est en partie situé entre le Piston et le Corps Principal, et d'autre part les Orifices sont présents uniquement sur le Piston.
- le Slider et le Piston ne forme qu'une seule pièce, c'est-à-dire que le Piston-Slidertranslate autour de la tige.
- le (ou les) Sliders traverse(nt) le Piston en une section non discontinue (par exemple cylindrique).
- le slider vient fermer un Volume d'huile côté compression lors d'une phase de compression (respectivement côté détente lors d'une phase de détente) qui diminue avec le rapprochement du Slider vers sa position extrême, la forme du Slider étant telle que ce Volume devient clos avant l'interaction « solide » du Slider avec le Piston et/ou la Tige, ledit Volume d'huile étant relié à la Chambre de Détente (respectivement de Compression) via un Circuit Hydraulique qui présent de plus un dispositif de type anti-retour permettant le mouvement d'huile uniquement depuis la Chambre de Détente (respectivement de Compression) vers le dit Volume.
- le slider et le Piston et/ou la tige présentent une forme complémentaire qui permet la fermeture des Orifices de façon progressive, et que lesdits Orifices soient totalement obstrués avant tout contact solide entre les différentes pièces.
- la Chambre de Compensation est solidaire de la Tige, et est située à l'opposé du Piston à l'extérieur du Corps principal.
- Le slider est arrangé pour translater librement au travers d'un Passage ménagé au niveau du Piston, distinct du ou desdits Canaux Internes.

L'invention concerne également selon une autre configuration un dispositif de compensation de volume d'un liquide d'amortissement pour amortisseur, utilisé en particulier pour les ensembles de suspensions pour cycles et autres véhicules, comprenant
- au moins un Corps Principal cylindrique creux contenant un fluide et présentant au moins une extrémité pourvue d'un passage axial pour le passage, l'étanchéité et le guidage d'une Tige, ladite Tige étant solidaire d'un Piston Principal translatant à l'intérieur dudit corps principal et le divisant en deux chambres de travail distinctes, l'une constituant une Chambre de Compression et l'autre constituant une Chambre de Détente, la Chambre de Compression et la Chambre de Détente étant connectées directement l'une à l'autre via un ou plusieurs Canaux Internes au Piston pour le passage du fluide au travers dudit Piston et un ou plusieurs Orifices de compensation au niveau du Piston débouchant dans la Chambre de Compression et dans la Chambre de Détente, des Clapets d'obturation des Orifices de Compensation débouchant dans la Chambre de Compression et dans la Chambre de Détente,
- au moins une pièce rigide interposée entre les clapets d'obturation débouchant dans la Chambre de Compression et dans la Chambre de Détente, ladite pièce rigide pouvant translater dans la direction axiale de la Tige et du Corps Principal entre une première position extrême dans laquelle les Orifices de Compensation débouchant dans la Chambre de Détente sont obturés par le ou lesdits clapet(s) dédié(s) tandis que les Orifices de Compensation débouchant dans la Chambre de Compression sont non obturés par le ou lesdits clapet(s) dédiées) et une deuxième position extrême, dite position de compression, dans laquelle les Orifices de Compensation débouchant dans la Chambre de Compression sont obturés par le ou lesdits clapet(s) dédié(s) tandis que les Orifices de Compensation débouchant dans la Chambre de détente sont non obturés par le ou lesdits clapet(s) dédié(s), les Orifices de compensations et la pièce rigide étant positionnés de telle sorte qu'il est impossible de fermer en même temps à la fois les Orifices de compensation débouchant dans la Chambre de Compression et les Orifices de compensation débouchant dans la Chambre de Détente, et que la somme des sections des Orifices de compensation non obturées par la pièce rigide d'actionnement permette toujours un passage d'huile direct,
l'invention étant remarquable en ce que ladite pièce rigide est arrangée pour translater librement au travers d'un Passage ménagé au niveau du Piston, distinct du ou desdits Canaux Internes.

Selon d'autres caractéristiques avantageuses et non limitatives de l'invention, prises seules ou selon toute combinaison techniquement réalisable :
- les Clapets d'obturation comportent deux plaques flexibles fixées de part et d'autre du Piston et solidaire à ce dernier, lesdites plaques étant aptes à passer d'une position d'obturation dans laquelle lesdites plaques sont disposées plaquées contre le piston de manière à obturer les Orifices de compensation à une position d'ouverture dans laquelle elles sont écartées du piston sous une action de poussée de la pièce rigide, libérant ainsi les orifices de compensation .
- la pièce rigide comporte une broche translatant au travers d'un passage traversant le Piston.
- les clapets d'obturation sont ménagés en extrémité de la broche.
- les clapets d'obturation et la pièce rigide forment une seule et même pièce.
- le passage au travers duquel la pièce rigide translate est ménagé entre le piston et le corps de piston.
- la pièce rigide est au contact du Corps Principal dans la direction radiale.
- la pièce rigide traverse le Piston en une section non discontinue (par exemple cylindrique).
- la pièce rigide vient fermer un Volume d'huile côté compression lors d'une phase de compression (respectivement côté détente lors d'une phase de détente) qui diminue avec le rapprochement de la pièce rigide vers sa position extrême, la forme de la pièce rigide étant telle que ce Volume devient clos avant l'interaction « solide » de la pièce rigide avec le Piston, ledit Volume d'huile étant relié à la Chambre de Détente (respectivement de Compression) via un Circuit Hydraulique qui présent de plus un dispositif de type anti-retour permettant le mouvement d'huile uniquement depuis la Chambre de Détente (respectivement de Compression) vers le dit Volume.
- la pièce rigide et le Piston présentent une forme complémentaire qui permet la fermeture des Orifices de façon progressive et en ce que lesdits Orifices soient totalement obstrués avant tout contact solide entre les différentes pièces.
- le dispositif comporte une Chambre de Compensation connectée directement (c'est-à-dire avec une perte de charge faible ou négligeable) à la Chambre de Compression et à la Chambre de Détente.
- la chambre de compensation est connectée à la Chambre de Compression et à la Chambre de Détente via un canal axial interne à la Tige raccordée fluidiquement au canal interne du Piston.
- la Chambre de Compensation est solidaire de la Tige, et est située à l'opposé du Piston et à l'extérieur du Corps principal.

### Brève description des dessins

Les dessins annexés illustrent l'invention :
- [Fig 1] et [Fig 2] représentent une vue schématique simplifiée en coupe longitudinale d'un amortisseur destinée au repérage des éléments principaux et précisant la position des chambres dites positive et négative lors des phases de compression [Fig 1] et de détente [Fig 2] ;
- [Fig 3] représente une vue schématique simplifiée en coupe longitudinale des éléments principaux d'un amortisseur équipé d'une Chambre de Compensation interne ;

- [Fig 4] représente une vue schématique simplifiée en coupe longitudinale des éléments principaux d'un amortisseur équipé d'une Chambre de Compensation externe ;
- [Fig 5] représente une vue schématique simplifiée en coupe longitudinale d'un premier mode de réalisation de l'invention ;
- [Fig 6], [Fig 7], [Fig 8] et [Fig 9] représentent une vue schématique simplifiée en coupe longitudinale de ce 1er mode de réalisation du Slider, précisant les chemins hydrauliques empruntés par le fluide lors des phases de compression [Fig 7], de détente [Fig 9] et transitoires [Fig 6] et [Fig 8] ;
- [Fig 10] représente une vue schématique simplifiée en coupe longitudinale d'une variante de réalisation de l'invention en l'absence de variation du volume de Tige dans l'amortisseur ;
- [Fig 11] et [Fig 12] représentent une vue schématique simplifiée en coupe longitudinale d'un 2ème mode de réalisation du Slider lors des phases de compression [Fig 11] et de détente [Fig 12] ;
- [Fig 13] représente une vue schématique simplifiée en coupe longitudinale d'un 3ème mode de réalisation du Slider (ici en position lors d'une phase de détente) ;
- [Fig 14], [Fig 15], [Fig 16] et [Fig 17] représentent une vue schématique simplifiée en coupe longitudinale d'une variante du 3ème mode de réalisation du Slider lors des phases de compression [Fig 15], de détente [Fig 17] et transitoires [Fig 14] et [Fig 16] ;
- [Fig 18], [Fig 19], [Fig 20] et [Fig 21] représentent une vue schématique simplifiée en perspective d'un ensemble Tige / Piston selon un 4ème mode de réalisation en perspective [Fig 18] et en coupe longitudinale lors des phases de compression [Fig 19], de détente [Fig 20].

Pour plus de clarté, les éléments identiques ou similaires (c'est à dire ayant la ou les mêmes fonctions) des différentes figures sont repérés par des signes de référence identiques sur l'ensemble des figures.

### Description détaillée

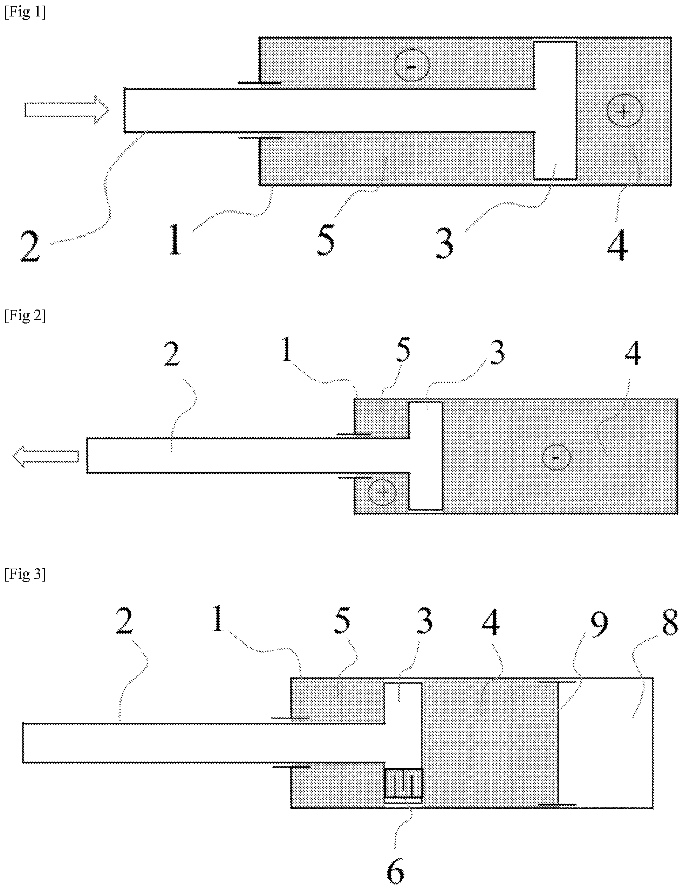

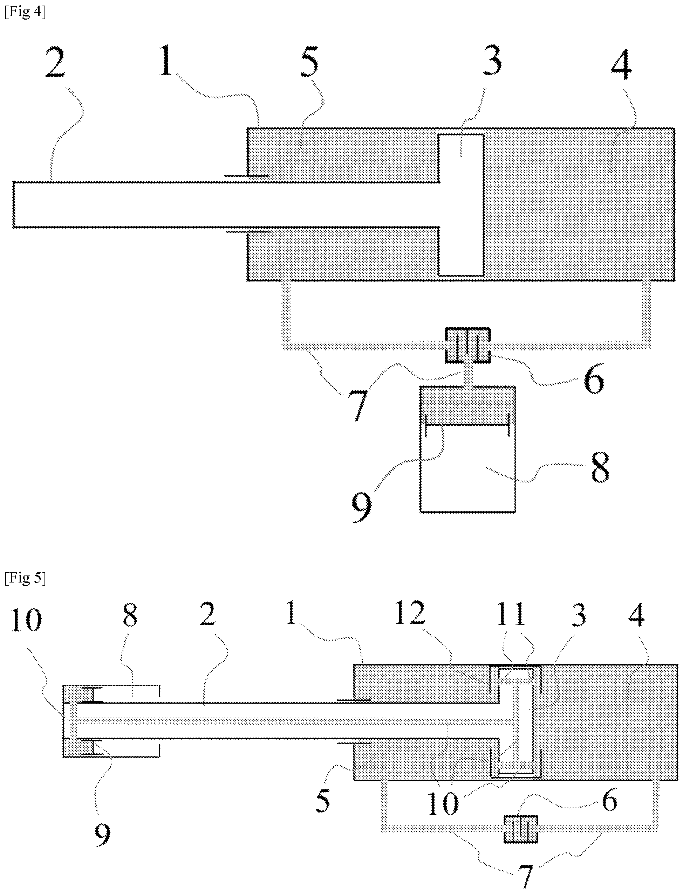

[Fig 1], [Fig 2], [Fig 3] et [Fig 4] sont des schémas en deux dimensions représentant des amortisseurs vu en coupe simplifiée afin de définir et nommer les différents éléments que l'on retrouve classiquement dans les amortisseurs et dont les rôles ont été présentés précédemment. Dans l'ensemble du texte, ces éléments présentent une majuscule pour signifier qu'ils sont précisément définis. L'ensemble de ces éléments sont référencés sur les figures.

Pour l'ensemble des figures, les doubles flèches représentent le sens de déplacement de la Tige (2), et donc du Piston (3) qui lui est lié.

Pour l'ensemble des figures, les (-) représentent une dépression, c'est-à-dire une pression inférieure ou égale à la pression statique de l'amortisseur. Pour rappel, la pression statique de l'amortisseur est la pression initiale en l'absence de mouvement de la Tige (2).

Pour l'ensemble des figures, les (+) représentent une surpression, c'est-à-dire une pression supérieure à la pression statique de l'amortisseur.

Sur [Fig 1], [Fig 2], [Fig 3] et [Fig 4], ainsi que toutes les autres, on retrouve les éléments décrit précédemment, tels le Corps Principal (1) qui contient le fluide d'amortissement, la Tige (2) dont le rôle est de retransmettre les efforts extérieurs, le Piston ou Piston Principal (3) dont le rôle est de transmettre à la Tige les efforts résultants des pertes de charges internes, la Chambre de Compression (4) dont la pression augmente en phase de compression et diminue en phase de détente, la Chambre de Détente (5) dont la pression augmente en phase de détente et diminue en phase de compression, le Dispositif de Dissipation d'Energie (6), les Circuits Hydrauliques (7) qui permettent la circulation de l'huile entre les Chambres de Compression et de Détente, le Chambre de Compensation (8) qui permet de compenser les variations du volume d'huile à l'intérieur de l'amortisseur, et le dispositif de séparation entre l'huile et l'élément compressible de la Chambre de Compensation qu'on nommera Piston Flottant (9) par soucis de simplification même s'il existe d'autres systèmes (membrane, etc.).

[Fig 3] présente en particulier un amortisseur dont la Chambre de Compensation (8) est directement en connexion avec la Chambre de Compression. Les inconvénients d'une telle solution ont été explicités précédemment.

[Fig 4] présente en particulier un amortisseur dont la Chambre de Compensation (8) est connectée « derrière » le Dispositif de Dissipation d'Energie (6) et dont les avantages et limites ont été explicités précédemment.

[Fig 5] est un schéma en deux dimensions représentant un mode de réalisation d'amortisseur respectant l'ensemble des requis de ladite invention.

Pour cela, le dispositif selon l'invention comporte au moins un Corps Principal (1) cylindrique creux contenant le fluide d'amortissement, dont l'une au moins de ses extrémités est pourvue d'un passage axial pour le passage, l'étanchéité et le guidage d'une Tige (2), ladite Tige étant solidaire d'un Piston Principal (3) translatant à l'intérieur du dit Corps (1) et le divisant en deux chambre de travail distinctes, l'une constituant une Chambre de Compression (4) et l'autre constituant une Chambre de Détente (5). Un Dispositif de Dissipation d'Energie (6) étant déporté à l'extérieur du Corps Principal (1) et présentant donc un Circuit Hydraulique (7) permettant la circulation de l'huile entre les Chambres de Compression et de Détente.

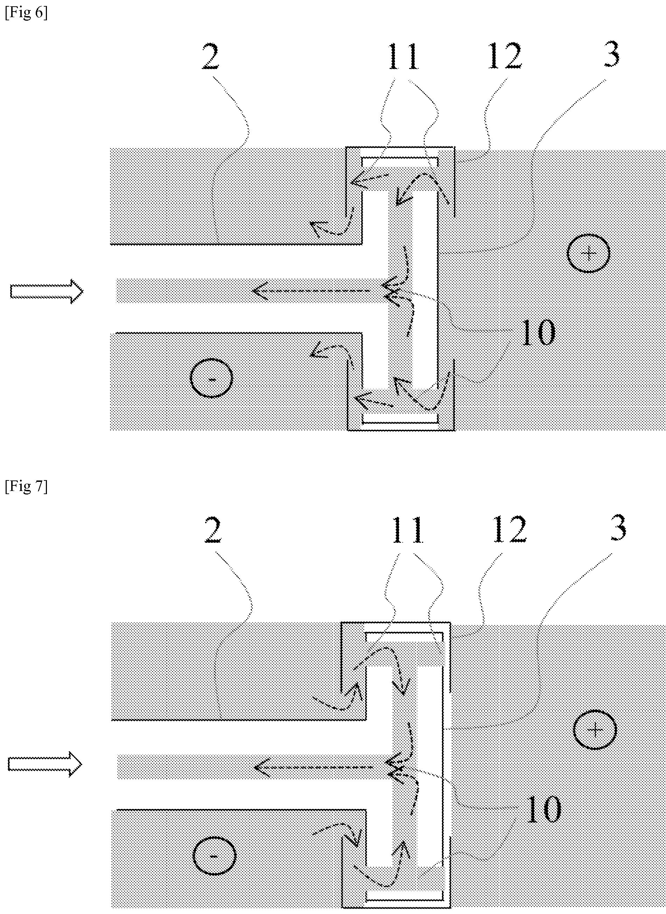

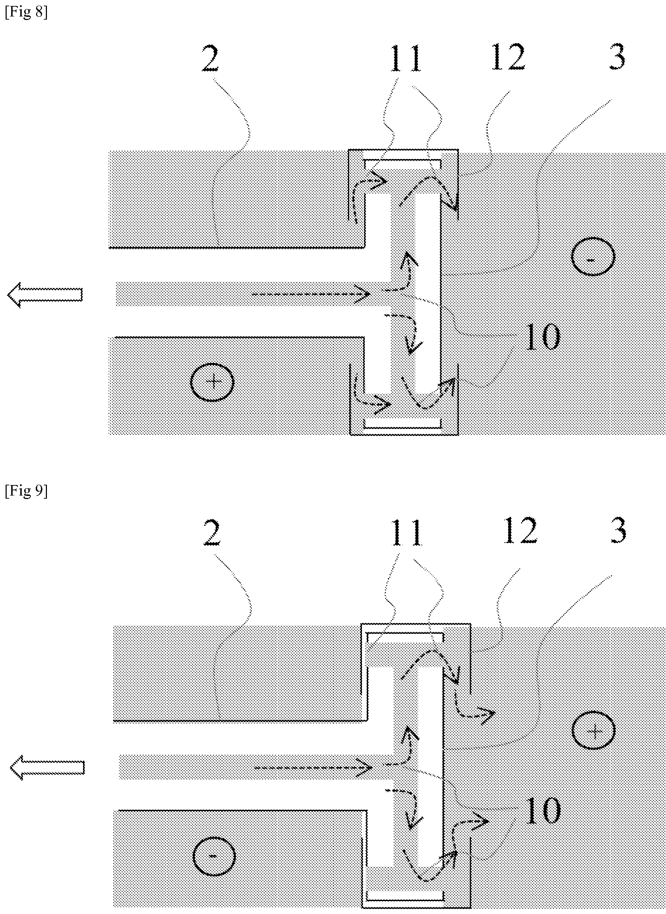

Selon ce mode de réalisation, le dispositif présente une Chambre de Compensation (8) connectée directement à la Chambre de Compression (4) ET à la Chambre de Détente (5) via des Canaux Internes (10) à la Tige (2) et au Piston (3), et donc plusieurs Orifices de Compensation (11) au niveau du Piston (3) débouchant dans la Chambre de Compression (4) ET dans la Chambre de Détente (5). Le Slider (12) est un premier mode de réalisation dont le fonctionnement est détaillé sur les [Fig 6], [Fig 7], [Fig 8] et [Fig 9]. Ici, le Slider (12) est une unique pièce qui translate librement autour du Piston (3). Dans ce mode de réalisation, le Slider (12) est formé d'une pièce rigide formant manchon disposée entre le Corps Principal (1) et le Piston (3), la pièce formant manchon présentant à chaque extrémité une collerette intérieure formant les Clapets d'obturation des orifices de compensation (11). Dans ce mode de réalisation, les Clapets d'obturation forment ainsi une seule et même pièce avec la pièce rigide formant manchon.

[Fig 6], [Fig 7], [Fig 8] et [Fig 9], les flèches en pointillés indiquent le trajet et le sens de déplacement de l'huile.

[Fig 6] correspond au début d'une phase de compression, c'est-à-dire la phase transitoire en compression. La Tige (2) se déplace vers la Chambre de Compression (ici vers la droite). La pression de la Chambre de Compression augmente, ce qui crée un déplacement d'huile de la Chambre de Compression vers la Chambre de Détente au travers des Orifice de Compensation (11) et des Canaux Interne (10). L'huile ne traverse donc pas le Dispositif de Dissipation d'Energie (ici externe) ; il n'y a pas de perte d'énergie, pas d'amortissement et donc pas de forces de réaction s'opposant au déplacement de la tige (2). Nous sommes alors en présence d'un phénomène de filtration. Lors d'une phase de compression, la Tige (2) entre dans le Corps Principal. Le volume d'huile remplacé par le volume de la Tige (2) entrante doit alors quitter le Corps Principale car nous sommes en présence d'un fluide « incompressible ». Ce volume d'huile transite alors de la Chambre de Compression vers la Chambre de Compensation via les Canaux Internes (10) comme le montre les flèches en pointillés .

[Fig 7] correspond la phase de compression « réelle », c'est-à-dire à la suite de l'obturation des Orifices de Compensation (11) par le Slider (12) côté compression. Comme les Orifices de Compensation (11) sont obturés, l'huile ne peut pas directement rejoindre la Chambre de Détente, mais est contrainte de se déplacer vers le Dispositif de Dissipation d'Energie externe. Il y a donc dissipation d'énergie. Nous sommes alors en présence d'un phénomène d'amortissement. Du fait de la présence de la Tige (2) dans la chambre de détente, le mouvement du Piston (3) vers la Chambre de Compression déplace plus de volume d'huile que le volume disponible dans la chambre de détente. Le surplus d'huile rejoint alors la Chambre de Compensation via les Orifices de Compensation (11) ouverts côté détente et les Canaux Internes (10).

[Fig 8] correspond au début d'une phase de détente, c'est-à-dire la phase transitoire en détente. La Tige (2) se déplace vers la Chambre de Détente (ici vers la gauche). La pression de la Chambre de Détente augmente, ce qui crée un déplacement d'huile de la Chambre de Détente vers la Chambre de Compression au travers des Orifice de Compensation (11) et des Canaux Interne (10). L'huile ne traverse donc pas le Dispositif de Dissipation d'Energie ; il n'y a pas de perte d'énergie, pas d'amortissement et donc pas de forces de réaction s'opposant au déplacement de la tige (2). Nous sommes alors en présence d'un phénomène de filtration. Lors d'une phase de détente, la Tige (2) sort du Corps Principal. Le volume d'huile libéré par le volume de la Tige (2) sortante doit alors être compensé. Ce volume d'huile transite alors de la Chambre de Compensation vers la Chambre de Compression via les Canaux Internes (10) comme le montre les flèches en pointillés.

[Fig 9] correspond la phase de détente « réelle », c'est-à-dire à la suite de l'obturation des Orifices de Compensation (11) par le Slider (12) côté détente. Comme les Orifices de Compensation (11) sont obturés, l'huile ne peut pas directement rejoindre la Chambre de Compression, mais est contrainte de se déplacer vers le Dispositif de Dissipation d'Energie externe. Il y a donc dissipation d'énergie. Nous sommes alors en présence d'un phénomène d'amortissement. Du fait de la présence de la Tige (2) dans la chambre de détente, le mouvement du Piston (3) vers la Chambre de détente déplace moins de volume d'huile que le volume disponible dans la chambre de Compression. Ce volume est alors compensé par le déplacement d'huile de la Chambre de Compensation vers la Chambre de Compression via les Orifices de Compensation (11) ouverts côté compression et les Canaux Internes (10).

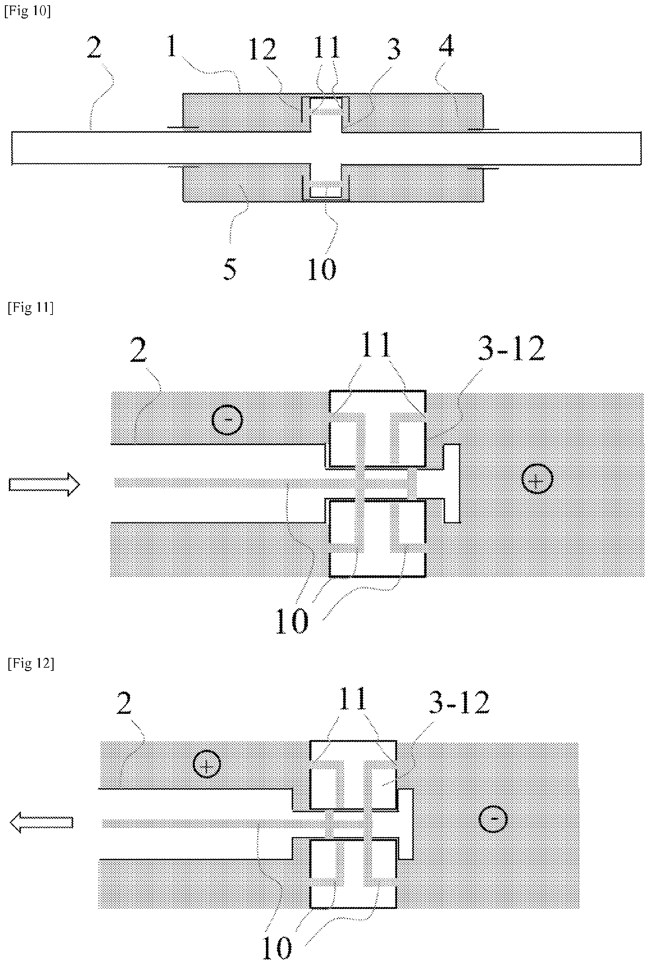

[Fig 10] montre un mode de réalisation de ladite invention en l'absence de Chambre de Compensation. Sur cet exemple, la Tige (2) est « traversante ». Son mouvement n'induit alors pas de variation de volume disponible pour l'huile. Dans ce cas, ladite invention peut être utilisée pour unique objectif d'obtenir le phénomène de filtration explicité précédemment. Ici, la solution est réalisée avec le même type de Slider (12) que précédemment. L'avantage de ce dernier est qu'il est de forme simple, et qu'étant en contact avec le Corps, grâce aux frottements que cela représente, il se place naturellement et rapidement dans la bonne position pour permette l'obturation et la libération des Orifices de Compensation (11).

[Fig 11] et [Fig 12] représentent un deuxième mode de réalisation du Slider (12). Ici, le Slider (12) et le Piston (3) ne font qu'un. Le « Piston-slider » (3-12) est donc directement en translation sur la Tige (2). Ce mode de réalisation a pour conséquence de diminuer le nombre de pièces.

[Fig 11] représente ce mode de réalisation pendant une phase de compression. On remarque alors que la Chambre de Compensation (non visible sur la figure) est uniquement en connexion avec la Chambre de Détente (à gauche) via les Canaux Internes (10).

[Fig 12] représente ce mode de réalisation pendant une phase de détente. On remarque alors que la Chambre de Compensation (non visible sur la figure) est uniquement en connexion avec la Chambre de Compression (à droit) via les Canaux Internes (10).

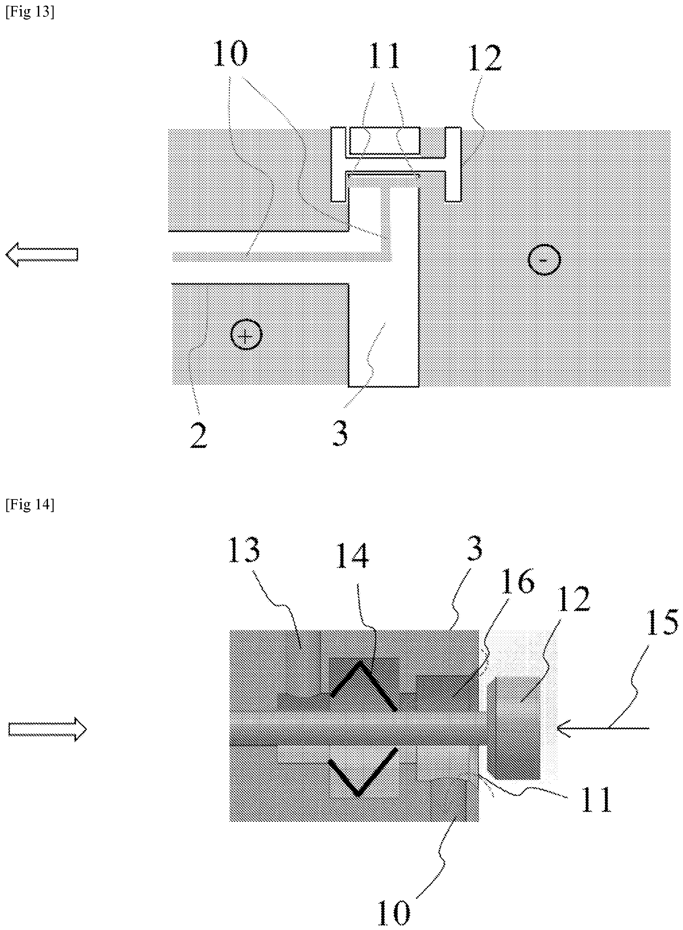

[Fig 13] représente un troisième mode de réalisation du Slider (12). Ici, le Slider (12) traverse le Piston (3) en une section non discontinue (par exemple cylindrique). Ce mode de réalisation a pour conséquence d'isoler le Sliders (3) des efforts transitant entre la Tige (2), le Piston (3) et le corps (non représenté sur la figure) et de garantir ainsi une translation de qualité et une réactivité optimisée du dispositif.

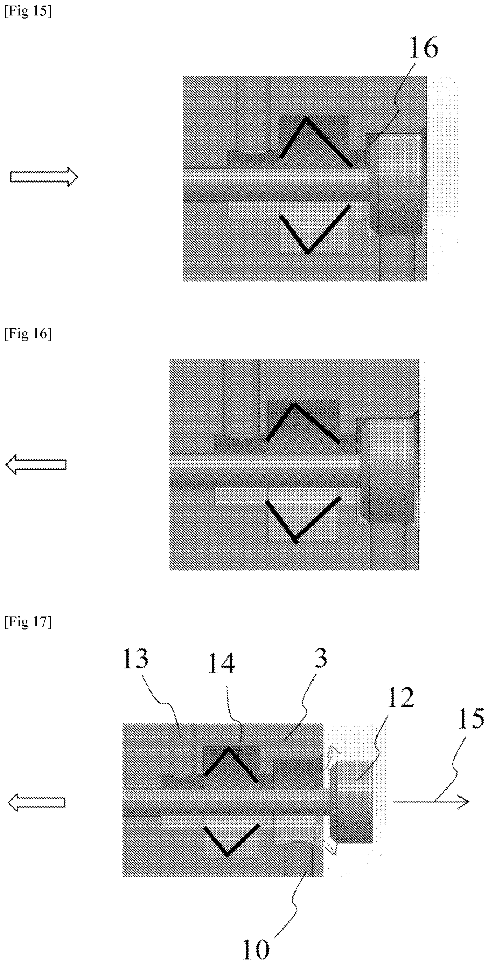

[Fig 14], [Fig 15], [Fig 16] et [Fig 17], représentent un mode particulier de réalisation de ce type de Slider « traversant » pendant les phases de début de compression [Fig 14], de compression [Fig 15], de début de détente [Fig 16] et de détente [Fig 17]. Lors du début de la phase de détente, le Slider (12) vient fermer un volume d'huile (16) qui diminue avec le rapprochement du Slider vers sa position extrême (obturation de l'Orifices de Compensation (11)). La flèche (15) montre le sens de déplacement du Slider (12). La forme du Slider est telle que ce volume (16) devient clos avant l'interaction « solide » entre le Slider (12) et le Piston (3). L'enfermement de ce volume crée une butée hydraulique. Ce volume d'huile est relié à un Circuit Hydraulique (13) en connexion avec la Chambre de détente et présentant un dispositif de type anti-retour (14) qui permet de réalimenter ledit volume d'huile lors du changement de phase et de déplacer à nouveau le Slider (12). Ce système fonctionnement pour une seul côté du piston. Le Slider (12) étant traversant, un système équivalent est présent de l'autre côté du piston. Un circuit hydraulique équivalent au circuit hydraulique (13) est alors relié à la Chambre de Compression. Dans ce mode de réalisation, le Slider (12) est formé par une broche rigide traversant un alésage ménagé dans le Piston (3), distinct du(des) canal(aux) interne(s) (10) pour le passage de fluide, ladite broche étant pourvue à chaque extrémité d'une extension radiale intérieure et d'une extension radiale extérieure, lesdites extensions assurant la fonction des Clapets d'obturation. Dans ce mode de réalisation, les Clapets d'obturation forment ainsi une seule et même pièce avec la broche.

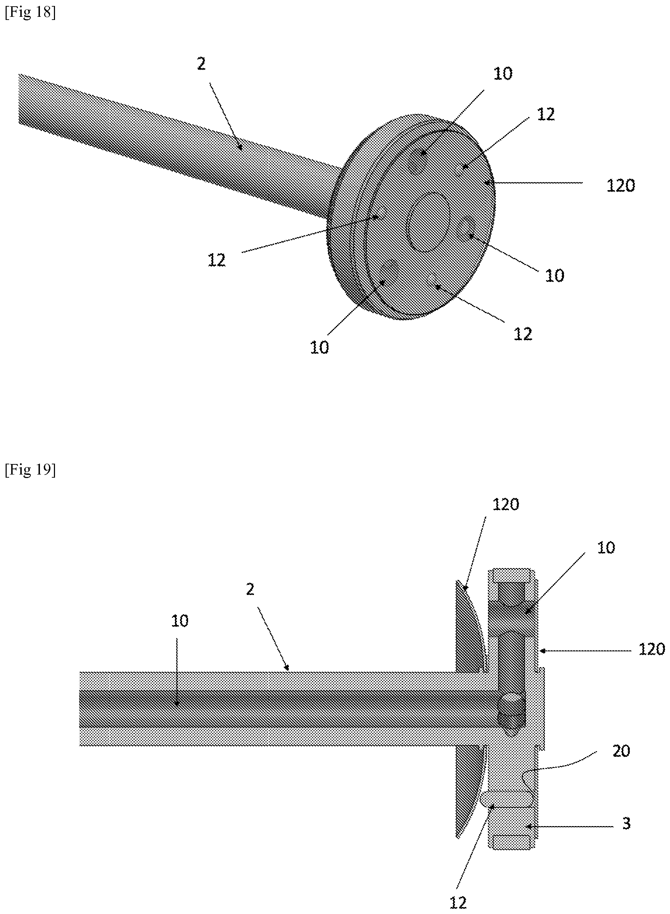

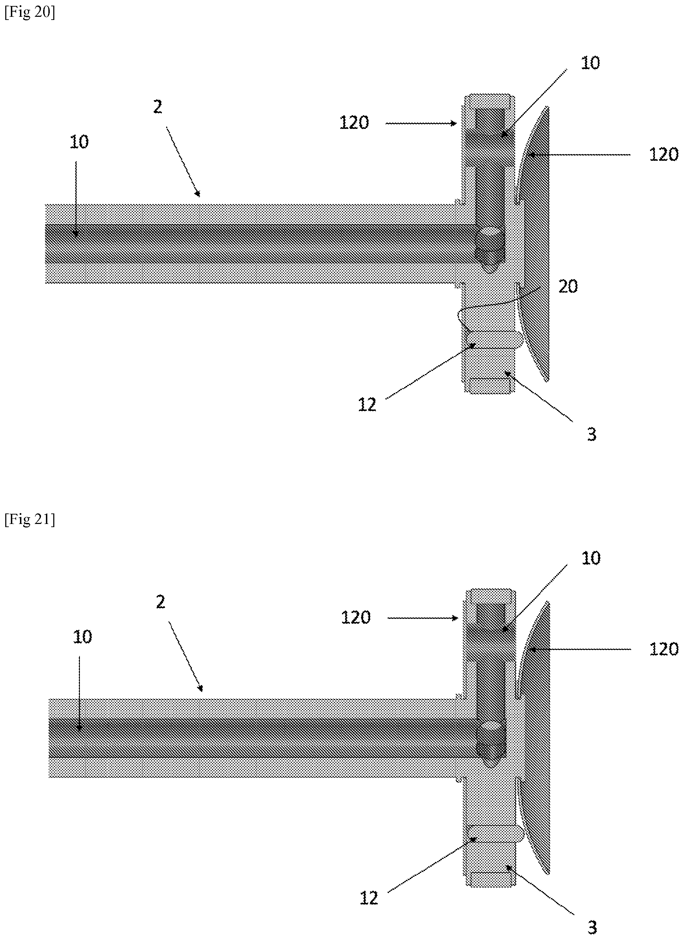

[Fig 18], [Fig 19], [Fig 20] et [Fig 21] représentent un 4ème mode de réalisation. Dans ce mode de réalisation, les Clapets d'obturation sont solidaires non pas du Slider (12) mais du Piston (3). Plus particulièrement, les Clapets d'obturation comprennent deux plaques (120) flexibles fixées de part et d'autre du Piston (3) et solidairement à ce dernier. Les Sliders 12 comprennent des broches montées dans des passages (20) traversant le Piston (3) et débouchant de part et d'autre du Piston (3) dans la chambre de détente (5) et dans la chambre de compression (4). Dans le mode de réalisation illustré (Fig. 18), le Piston (3) comporte trois passages (20) logeant respectivement une broche (12) et trois canaux internes (10) permettant le passage d'huile. Les broches présentent une longueur suffisante pour assurer le « décollement » des plaques (120) du Piston (3).

Comme représenté sur les [Fig 19], [Fig 20], les plaques sont aptes à passer d'une position d'obturation dans laquelle lesdites plaques sont disposées plaquées contre le piston de manière à obturer les Orifices de compensation (11) à une position d'ouverture dans laquelle elles sont écartées du piston sous l'action de poussée des broches, libérant ainsi les orifices de compensation (11) sus l'action des broches.

Ainsi, [Fig 19] représente la phase de compression « réelle » . La plaque côté chambre de compression (4) est plaquée contre la face du Piston (3) à laquelle est associée, obturant les Orifices de compensation (11) débouchant dans la Chambre de Compression (4) tandis que la plaque côté chambre de détente (5) est repoussée par les Sliders (12), ouvrant ainsi les Orifice de compensation (11) débouchant dans la Chambre de détente (5).

[Fig 20] représente la phase de détente « réelle » . La plaque côté chambre de détente (5) est plaquée contre la face du Piston (3) à laquelle est associée, obturant les Orifices de compensation (11) débouchant dans la Chambre de détente (5) tandis que la plaque côté chambre de compression (4) est repoussée par les Sliders (12), ouvrant ainsi les Orifice de compensation (11) débouchant dans la Chambre de compression (4).

En choisissant la raideur des Clapets et la longueur des broches, il est possible de jouer sur la réactivité du système et sa plage de filtration (fréquences et amplitudes filtrées), i.e. la plage sur laquelle les Chambres de détente (4) et la Chambre de compression (5) sont en connexion directe et pour que le piston soit incapable de transmettre un effort (pas de mouvement d'huile). [Fig 21] représente la position des Clapets en phase de filtration.

La présente invention (et ces différents modes de réalisation) est particulièrement adaptée pour la réalisation d'amortisseur utilisé dans les systèmes de suspension avant ou arrière des véhicules terrestres, en particulier, les vélos, motos, voiture, etc.

L'invention est décrite dans ce qui précède à titre d'exemple. Il est entendu que l'homme du métier est à même de réaliser différentes variantes de réalisation de l'invention.

### Liste des signes de référence

- (1) Corps Principal
- (2) Tige
- (3) Piston
- (4) Chambre de Compression
- (5) Chambre de Détente
- (6) Dispositif de Dissipation d'Energie
- (7) Circuits Hydrauliques
- (8) Chambre de Compensation
- (9) Piston Flottant
- (10) Canaux Internes
- (11) Orifices de Compensation
- (12) Slider
- (13) Circuit Hydraulique
- (14) Dispositif Anti-retour
- (15) Sens de déplacement du Slider
- (16) Volume d'Huile « enfermé »

## Revendications

1. Dispositif de compensation de volume d'un liquide d'amortissement pour amortisseur, utilisé en particulier pour les ensembles de suspensions pour cycles et autres véhicules, comprenant
- au moins un Corps Principal (1) cylindrique creux contenant un fluide et présentant au moins une extrémité pourvue d'un passage axial pour le passage, l'étanchéité et le guidage d'une Tige (2), ladite Tige étant solidaire d'un Piston Principal (3) translatant à l'intérieur dudit corps principal et le divisant en deux chambres de travail distinctes, l'une constituant une Chambre de Compression (4) et l'autre constituant une Chambre de Détente (5), la Chambre de Compression (4) et la Chambre de Détente (5) étant connectées directement l'une à l'autre via un ou plusieurs Canaux Internes (10) au Piston (3) pour le passage du fluide au travers dudit Piston (3) et un ou plusieurs Orifices (11) de compensation au niveau du Piston (3) débouchant dans la Chambre de Compression (4) et dans la Chambre de Détente (5),
- des Clapets d'obturation des Orifices (11) de Compensation débouchant dans la Chambre de Compression (4) et dans la Chambre de Détente (5),
- au moins une pièce rigide (12) interposée entre les clapets d'obturation débouchant dans la Chambre de Compression (4) et dans la Chambre de Détente (5), ladite pièce rigide (12) pouvant translater dans la direction axiale de la Tige (2) et du Corps Principal (1) entre une première position extrême dans laquelle les Orifices de Compensation (11) débouchant dans la Chambre de Détente (5) sont obturés par le ou lesdits clapet(s) dédié(s) tandis que les Orifices de Compensation (11) débouchant dans la Chambre de Compression (4) sont non obturés par le ou lesdits clapet(s) dédié(s) et une deuxième position extrême, dite position de compression, dans laquelle les Orifices de Compensation (11) débouchant dans la Chambre de Compression (4) sont obturés par le ou lesdits clapet(s) dédié(s) tandis que les Orifices de Compensation (11) débouchant dans la Chambre de détente (5) sont non obturés par le ou lesdits clapet(s) dédié(s), les Orifices de compensation (11) et la pièce rigide (12) étant positionnés de telle sorte qu'il est impossible de fermer en même temps à la fois les Orifices de compensation débouchant dans la Chambre de Compression et les Orifices de compensation débouchant dans la Chambre de Détente, et que la somme des sections des Orifices de compensation (11) non obturées par la pièce rigide d'actionnement permette toujours un passage d'huile direct
**caractérisé en ce que** ladite pièce rigide (12) est arrangée pour translater librement au travers d'un Passage ménagé au niveau du Piston (3), distinct du ou desdits Canaux Internes (10).

2. Dispositif de compensation de volume du liquide d'amortissement pour amortisseur selon la revendication 1, **caractérisé en ce que** les Clapets d'obturation comportent deux plaques flexibles fixées de part et d'autre du Piston (3) et solidaire à ce dernier, lesdites plaques étant aptes à passer d'une position d'obturation dans laquelle lesdites plaques sont disposées plaquées contre le piston de manière à obturer les Orifices de compensation (11) à une position d'ouverture dans laquelle elles sont écartées du piston sous une action de poussée de la pièce rigide, libérant ainsi les orifices de compensation (11).

3. Dispositif de compensation de volume du liquide d'amortissement pour amortisseur selon la revendication 1 ou la revendication 2, **caractérisé en ce que** la pièce rigide (12) comporte une broche translatant au travers d'un passage traversant le Piston (3).

4. Dispositif de compensation de volume du liquide d'amortissement pour amortisseur selon la revendication précédente, **caractérisé en ce que** les clapets d'obturation sont ménagés en extrémité de la broche.

5. Dispositif de compensation de volume du liquide d'amortissement pour amortisseur, selon l'un quelconque des revendications 1 à 4, **caractérisé en ce que** les clapets d'obturation et la pièce rigide forment une seule et même pièce.

6. Dispositif de compensation de volume du liquide d'amortissement pour amortisseur selon l'un quelconque des revendications 1 à 3, **caractérisé en ce que** le passage au travers duquel la pièce rigide (12) translate est ménagé entre le piston et le corps de piston.

7. Dispositif de compensation de volume du liquide d'amortissement pour amortisseur, selon la revendication précédente, **caractérisé en ce que** la pièce rigide (12) est au contact du Corps Principal (1) dans la direction radiale.

8. Dispositif de compensation de volume du liquide d'amortissement pour amortisseur, selon l'un quelconque des revendications 1 à 5, **caractérisé en ce que** la pièce rigide (12) traverse le Piston (3) en une section non discontinue.

9. Dispositif de compensation de volume du liquide d'amortissement pour amortisseur, selon la revendication 6, **caractérisé en ce que** :
• la pièce rigide (12) vient fermer un Volume d'huile (16) côté compression lors d'une phase de compression (respectivement côté détente lors d'une phase de détente) qui diminue avec le rapprochement de la pièce rigide (12) vers sa position extrême,
• la forme de la pièce rigide (12) étant telle que ce Volume (16) devient clos avant l'interaction « solide » de la pièce rigide (12) avec le Piston (3),
• ledit Volume d'huile (16) étant relié à la Chambre de Détente (5) (respectivement de Compression (4)) via un Circuit Hydraulique (13) qui présent de plus un dispositif de type anti-retour permettant le mouvement d'huile uniquement depuis la Chambre de Détente (5) (respectivement de Compression (4)) vers le dit Volume (16).

10. Dispositif de compensation de volume du liquide d'amortissement pour amortisseur selon l'un quelconque des revendications précédentes, **caractérisé en ce que** la pièce rigide (12) et le Piston (3) présentent une forme complémentaire qui permet la fermeture des Orifices (11) de façon progressive et **en ce que** lesdits Orifices (11) soient totalement obstrués avant tout contact solide entre les différentes pièces.

11. Dispositif de compensation de volume du liquide d'amortissement pour amortisseur selon l'un quelconque des revendications précédentes, **caractérisé en ce qu'**il comporte une Chambre de Compensation (8) connectée directement à la Chambre de Compression (4) et à la Chambre de Détente (5).

12. Dispositif de compensation de volume du liquide d'amortissement pour amortisseur selon la revendication précédente, **caractérisé en ce que** la Chambre de Compensation (8) est connectée à la Chambre de Compression (4) et à la Chambre de Détente (5) via un canal axial interne (10) à la Tige (2) raccordée fluidiquement au canal interne (10) du Piston (3).

13. Dispositif de compensation de volume du liquide d'amortissement pour amortisseur, selon la revendication précédente, **caractérisé en ce que** :
• la Chambre de Compensation (8) est solidaire de la Tige (2),
• la Chambre de Compensation (8) est située à l'opposé du Piston (3),
• et la Chambre de Compensation est située à l'extérieur du Corps principal (1).

## Patentansprüche

1. Vorrichtung zum Ausgleichen eines Volumens einer Dämpfungsflüssigkeit für einen Dämpfer, der insbesondere für Radaufhängungsanordnungen für Fahrräder und andere Fahrzeuge verwendet wird, umfassend
- mindestens einen hohlen zylindrischen Hauptkörper (1), der ein Fluid enthält und mindestens ein Ende vorweist, das mit einem axialen Durchgang für den Durchgang, die Abdichtung und die Führung einer Stange (2) versehen ist, wobei die Stange mit einem Hauptkolben (3) fest verbunden ist, der sich im Inneren des Hauptkörpers verschiebt und ihn in zwei verschiedene Arbeitskammern unterteilt, von denen die eine eine Kompressionskammer (4) bildet und die andere eine Expansionskammer (5) bildet, wobei die Kompressionskammer (4) und die Expansionskammer (5) über einen oder mehrere Innenkanäle (10) zu dem Kolben (3) für den Durchgang des Fluids durch den Kolben (3) und eine oder mehrere Ausgleichsöffnungen (11) an dem Kolben (3), die in die Kompressionskammer (4) und in die Expansionskammer (5) münden, direkt miteinander verbunden sind,
- Ventile zum Verschließen der Ausgleichsöffnungen (11), die in die Kompressionskammer (4) und in die Expansionskammer (5) münden,
- mindestens ein starres Teil (12), das zwischen den Verschlussventilen eingefügt ist, die in die Kompressionskammer (4) und in die Expansionskammer (5) münden, wobei sich das starre Teil (12) in der axialen Richtung der Stange (2) und des Hauptkörpers (1) zwischen einer ersten Endposition, in der die Ausgleichsöffnungen (11), die in die Expansionskammer (5) münden, durch das/die spezielle(n) Ventil(e) verschlossen sind, während die Ausgleichsöffnungen (11), die in die Kompressionskammer münden (4), nicht durch das/die spezielle(n) Ventil(e) verschlossen sind, und einer zweiten Endposition, Kompressionsposition genannt, verschieben kann, in der die Ausgleichsöffnungen (11), die in die Kompressionskammer (4) münden, durch das/die spezielle(n) Ventil(e) verschlossen sind, während die Ausgleichsöffnungen (11), die in die Expansionskammer (5) münden, nicht durch das/die spezielle(n) Ventil(e) verschlossen sind, wobei die Ausgleichsöffnungen (11) und das starre Teil (12) so positioniert sind, dass es unmöglich ist, auf einen Schlag gleichzeitig die Ausgleichsöffnungen, die in die Kompressionskammer münden, und die Ausgleichsöffnungen zu verschließen, die in die Expansionskammer münden, und dass die Summe der Abschnitte der Ausgleichsöffnungen (11), die nicht durch das starre Betätigungsteil verschlossen werden, immer einen direkten Öldurchgang zulässt,
**dadurch gekennzeichnet, dass** das starre Teil (12) zum freien Verschieben durch einen Durchgang eingerichtet ist, der an dem Kolben (3) vorgesehen ist, der von dem oder den Innenkanälen (10) verschieden ist.

2. Vorrichtung zum Ausgleichen des Volumens der Dämpfungsflüssigkeit für den Dämpfer nach Anspruch 1, **dadurch gekennzeichnet, dass** die Verschlussventile zwei flexible Platten aufweisen, die auf beiden Seiten des Kolbens (3) befestigt und mit diesem letzteren fest verbunden sind, wobei die Platten geeignet sind, um von einer Verschlussposition, in der die Platten so gegen den Kolben plattiert angeordnet sind, dass die Ausgleichsöffnungen (11) verschlossen werden, in eine Öffnungsposition überzugehen, in der sie unter einer Druckwirkung des starren Teils von dem Kolben beabstandet werden, wobei die Ausgleichsöffnungen (11) so freigegeben werden.

3. Vorrichtung zum Ausgleichen des Volumens der Dämpfungsflüssigkeit für den Dämpfer nach Anspruch 1 oder 2, **dadurch gekennzeichnet, dass** das starre Teil (12) einen Stift aufweist, der sich durch einen Durchgang verschiebt, der den Kolben (3) durchquert.

4. Vorrichtung zum Ausgleichen des Volumens der Dämpfungsflüssigkeit für den Dämpfer nach dem vorstehenden Anspruch, **dadurch gekennzeichnet, dass** die Verschlussventile an einem Ende des Stifts vorgesehen sind.

5. Vorrichtung zum Ausgleichen des Volumens der Dämpfungsflüssigkeit für den Dämpfer nach einem der Ansprüche 1 bis 4, **dadurch gekennzeichnet, dass** die Verschlussventile und das starre Teil ein einziges und gleiches Teil ausbilden.

6. Vorrichtung zum Ausgleichen des Volumens der Dämpfungsflüssigkeit für den Dämpfer nach einem der Ansprüche 1 bis 3, **dadurch gekennzeichnet, dass** der Durchgang, durch den sich das starre Teil (12) verschiebt, zwischen dem Kolben und dem Kolbenkörper vorgesehen ist.

7. Vorrichtung zum Ausgleichen des Volumens der Dämpfungsflüssigkeit für den Dämpfer nach dem vorstehenden Anspruch, **dadurch gekennzeichnet, dass** das starre Teil (12) in der radialen Richtung mit dem Hauptkörper (1) in Kontakt steht.

8. Vorrichtung zum Ausgleichen des Volumens der Dämpfungsflüssigkeit für den Dämpfer nach einem der Ansprüche 1 bis 5,
**dadurch gekennzeichnet, dass** das starre Teil (12) den Kolben (3) in einem nicht unterbrochenen Abschnitt durchquert.

9. Vorrichtung zum Ausgleichen des Volumens der Dämpfungsflüssigkeit für den Dämpfer nach Anspruch 6, **dadurch gekennzeichnet, dass**:
• das starre Teil (12) auf der Kompressionsseite während einer Kompressionsphase (beziehungsweise Expansionsseite während einer Expansionsphase) ein Ölvolumen (16) einschließt, das mit der Annäherung des starren Teils (12) zu seiner Endposition hin abnimmt,
• die Form des starren Teils (12) so ist, dass dieses Volumen (16) vor der "festen" Wechselwirkung des starren Teils (12) mit dem Kolben (3) geschlossen wird,
• das Ölvolumen (16) an die Expansionskammer (5) (beziehungsweise Kompressionskammer (4)) über einen hydraulischen Kreislauf (13) angeschlossen ist, der außerdem eine rückschlagartige Vorrichtung vorweist, die die Bewegung von Öl nur aus der Expansionskammer (5) (beziehungsweise Kompressionskammer (4)) zu dem Volumen (16) hin ermöglicht.

10. Vorrichtung zum Ausgleichen des Volumens der Dämpfungsflüssigkeit für den Dämpfer nach einem der vorstehenden Ansprüche,
**dadurch gekennzeichnet, dass** das starre Teil (12) und der Kolben (3) eine komplementäre Form vorweisen, die das Schließen der Öffnungen (11) fortschreitend ermöglicht, und **dadurch, dass** die Öffnungen (11) vor jeglichem festem Kontakt zwischen den unterschiedlichen Teilen vollständig verschlossen werden.

11. Vorrichtung zum Ausgleichen des Volumens der Dämpfungsflüssigkeit für den Dämpfer nach einem der vorstehenden Ansprüche,
**dadurch gekennzeichnet, dass** sie eine Ausgleichskammer (8) aufweist, die mit der Kompressionskammer (4) und mit der Expansionskammer (5) direkt verbunden ist.

12. Vorrichtung zum Ausgleichen des Volumens der Dämpfungsflüssigkeit für den Dämpfer nach dem vorstehenden Anspruch, **dadurch gekennzeichnet, dass** die Ausgleichskammer (8) mit der Kompressionskammer (4) und mit der Expansionskammer (5) über einen axialen Innenkanal (10) zu der Stange (2) direkt verbunden ist, der mit dem Innenkanal (10) des Kolbens (3) verknüpft ist.

13. Vorrichtung zum Ausgleichen des Volumens der Dämpfungsflüssigkeit für den Dämpfer nach dem vorstehenden Anspruch,
**dadurch gekennzeichnet, dass**:
• die Ausgleichskammer (8) mit der Stange (2) fest verbunden ist,
• die Ausgleichskammer (8) gegenüber dem Kolben (3) liegt,
• und die Ausgleichskammer außerhalb des Hauptkörpers (1) liegt.

## Claims

1. Device for compensating the volume of a damping liquid for a damper, used in particular for suspension assemblies for cycles and other vehicles, comprising
- at least one hollow cylindrical main body (1) containing a fluid and having at least one end provided with an axial passage for the passage, sealing and guiding of a rod (2), said rod being rigidly connected to a main piston (3) which moves in translation inside said main body and divides it into two different work chambers, one constituting a compression chamber (4) and the other constituting an expansion chamber (5), the compression chamber (4) and the expansion chamber (5) being directly connected to each other via one or more internal channels (10) in the piston (3) for the passage of the fluid through said piston (3) and one or more compensation ports (11) at the piston (3) opening into the compression chamber (4) and into the expansion chamber (5),
- valves for closing off the compensation ports (11) opening into the compression chamber (4) and into the expansion chamber (5),
- at least one rigid part (12) interposed between the closing-off valves opening into the compression chamber (4) and into the expansion chamber (5), said rigid part (12) being able to move in translation in the axial direction of the rod (2) and the main body (1) between a first end position in which the compensation ports (11) opening into the expansion chamber (5) are closed off by said dedicated valve(s), while the compensation ports (11) opening into the compression chamber (4) are not closed off by said dedicated valve(s), and a second end position, referred to as the compression position, in which the compensation ports (11) opening into the compression chamber (4) are closed off by said dedicated valve(s), while the compensation ports (11) opening into the expansion chamber (5) are not closed off by said dedicated valve(s), the compensation ports (11) and the rigid part (12) being positioned such that it is impossible to simultaneously close both the compensation ports opening into the compression chamber and the compensation ports opening into the expansion chamber, and such that the sum of the cross-sections of the compensation ports (11) which are not closed off by the rigid actuating part still allows for a direct passage of oil, **characterized in that** said rigid part (12) is arranged to move in translation freely through a passage provided at the piston (3), which passage is different from said internal channel(s) (10).

2. Device for compensating the volume of the damping liquid for a damper according to claim 1, **characterized in that** the closing-off valves comprise two flexible plates which are fixed on either side of the piston (3) and rigidly connected thereto, said plates being able to move from a closing-off position, in which said plates are pressed against the piston so as to close off the compensation ports (11), to an open position, in which said plates are moved away from the piston by a pushing action of the rigid part, thus freeing the compensation ports (11).

3. Device for compensating the volume of the damping liquid for a damper according to either claim 1 or claim 2, **characterized in that** the rigid part (12) comprises a pin which moves in translation through a passage passing through the piston (3).

4. Device for compensating the volume of the damping liquid for a damper according to the preceding claim, **characterized in that** the closing-off valves are arranged at the end of the pin.

5. Device for compensating the volume of the damping liquid for a damper according to any of claims 1 to 4, **characterized in that** the closing-off valves and the rigid part form a single part.

6. Device for compensating the volume of the damping liquid for a damper according to any of claims 1 to 3, **characterized in that** the passage through which the rigid part (12) moves in translation is provided between the piston and the piston body.

7. Device for compensating the volume of the damping liquid for a damper according to the preceding claim, **characterized in that** the rigid part (12) is in contact with the main body (1) in the radial direction.

8. Device for compensating the volume of the damping liquid for a damper according to any of claims 1 to 5, **characterized in that** the rigid part (12) passes through the piston (3) in a non-discontinuous cross-section.

9. Device for compensating the volume of the damping liquid for a damper according to claim 6, **characterized in that:**
• the rigid part (12) closes an oil volume (16) on the compression side during a compression phase (or on the expansion side during an expansion phase), which decreases as the rigid part (12) approaches its end position,
• the shape of the rigid part (12) being such that this volume (16) becomes closed before the "solid" interaction of the rigid part (12) with the piston (3),
• said oil volume (16) being connected to the expansion chamber (5) (respectively compression chamber (4)) via a hydraulic circuit (13) which further comprises a non-return device allowing the movement of oil solely from the expansion chamber (5) (respectively compression chamber (4)) to said volume (16).

10. Device for compensating the volume of the damping liquid for a damper according to any of the preceding claims, **characterized in that** the rigid part (12) and the piston (3) have a complementary shape which allows the ports (11) to be closed progressively **and in that** said ports (11) are completely obstructed before any solid contact between the different parts.

11. Device for compensating the volume of the damping liquid for a damper according to any of the preceding claims, **characterized in that** it comprises a compensation chamber (8) which is connected directly to the compression chamber (4) and to the expansion chamber (5).

12. Device for compensating the volume of the damping liquid for a damper according to the preceding claim, **characterized in that** the compensation chamber (8) is connected to the compression chamber (4) and to the expansion chamber (5) via an internal axial channel (10) in the rod (2) which is fluidically connected to the internal channel (10) of the piston (3).

13. Device for compensating the volume of the damping liquid for a damper according to the preceding claim, **characterized in that:**
• the compensation chamber (8) is rigidly connected to the rod (2),
• the compensation chamber (8) is located opposite the piston (3),
• and the compensation chamber is located outside of the main body (1).
